# EUROPEAN PATENT APPLICATION

(11) **EP 2 363 856 A1**
(43) Date of publication of application: **07.09.2011**
(21) Application number: 10738345.7
(22) Date of filing: 03.02.2010
(51) Int. Cl.: G11B 7/24, G11B 7/243, G11B 7/254, G11B 7/257

(54) **OPTICAL INFORMATION RECORDING MEDIUM, RECORDING METHOD, REPRODUCTION METHOD, AND RECORDING/REPRODUCTION DEVICE**

(30) Priority: 04.02.2009 JP 2009023452
(71) Applicant: Panasonic Corporation, Kadoma-shi Osaka 571-8501 (JP)
(72) Inventor: KITAURA, Hideki, Osaka 540-6207 (JP); NAGATA, Kenichi, Osaka 540-6207 (JP)
(74) Representative: Grünecker, Kinkeldey, Stockmair & Schwanhäusser Anwaltssozietät
(86) International application number: PCT/JP2010/000630
(87) International publication number: WO 2010/090004

(57) **Abstract**

An optical information storage medium includes: a substrate; a cover layer; and a first information layer interposed between the substrate and the cover layer, recording of information in the first information layer and reading of information recorded in the first information layer being realized by irradiation with a light beam incoming from the cover layer side, wherein the first information layer includes a recording film and a protection film interposed between the recording film and the cover layer, and a distance between the cover layer and the recording film is not less than 0.5 nm and not more than 12 nm.

## Description

### TECHNICAL FIELD

The present invention relates to an optical information storage medium in which information is recorded and from which information is read by means of a light beam, such as laser light, a method of recording/reading information in/from an optical information storage medium, and a recording/reading apparatus.

### BACKGROUND ART

In recent years, optical information storage media in which information can be recorded by means of laser light irradiation have been widely researched, developed, and commercialized. Such optical information storage media include rewritable media in which information can be recorded and previously-recorded information can be erased or overwritten, and write-once media in which information can be recorded but recorded information cannot be erased or overwritten with new information.

A known example of the write-once optical information storage media is an optical information storage medium in which the information layer has an information recording film that is made of a material which contains an oxide as a base material and a metal element dispersed in the base material, specifically, an information recording film that contains a mixture of Te and TeO₂, TeOₓ (0<x<2) (see, for example, Patent Document 1). The recording film which contains TeOₓ is usable after its formation, without being subjected to an initialization treatment, such as laser annealing, even though it is in an amorphous state. In other words, after the formation of the recording film that contains TeOₓ, information can be recorded in the recording film, even without a thermal treatment, i.e., even though the recording film is in an amorphous state. Thus, the manufacture of the optical information storage medium is easy, and therefore, the optical information storage medium can advantageously be manufactured at a low cost.

When such an optical information storage medium is irradiated with laser light which is greater than a predetermined power level, in a region of the medium irradiated with the laser light, the recording film is changed from an amorphous phase to a crystalline phase, whereby a record mark is formed. For example, a set of spaces and marks expressed by lengths that are determined based on a signal modulated according to information that is to be recorded are formed on a track of an information layer. The amorphous phase and the crystalline phase in the recording film that contains TeOₓ have a large difference in reflectance. Therefore, by scanning the track in which the information has been recorded with laser light of such a power that would not cause a phase change in the recording film, reflected light whose intensity varies according to the spaces and marks can be obtained, and the information recorded in the optical information storage medium can be read out. The change from the amorphous phase to the crystalline phase in the recording film that contains TeOₓ is irreversible, and therefore, correction and erasure cannot be realized by overwriting of information.

In recent years, an optical information storage medium which has a greater capacity has been demanded. A commonly-employed measure of increasing the capacity of the optical information storage medium is decreasing the wavelength of laser light, or increasing the numerical aperture of the objective lens that focuses the laser light, so as to decrease the spot diameter of the laser light such that the recording plane density is improved. Also, an optical information storage medium which has a multilayer structure, including a plurality of stacked information layers, such that the recordable area of one optical information storage medium is increased, has been in practical use in recent years. To realize such high-density recording and multilayer recording, an optical information storage medium in which the composition of a recording material composed of TeOₓ and an additive such as Pd or Au and the thickness of the recording film are adapted has been proposed (see, for example, Patent Document 2). When the recording density of the optical information storage medium is increased, the intensity of the reflected light may disadvantageously decrease, or a problem of thermal interference between marks may arise. To solve these problems, providing a reflective film adjacent to the recording film such that optical interference effects can be utilized to increase the light absorbance of the recording film and hence to improve the recording sensitivity, and that heat generated in the recording film is released to the reflective film and hence thermal interference between marks can be prevented, is proposed (see, for example, Patent Document 3).

### CITATION LIST

### PATENT LITERATURE

Patent Document 1: Japanese Laid-Open Patent Publication No. 50-46317
Patent Document 1: Pamphlet of WO 98/09823
Patent Document 2: Japanese Laid-Open Patent Publication No. 2002-251778

### SUMMARY OF INVENTION

### TECHNICAL PROBLEM

In high-density recording such as described above, particularly in recording with the use of violet laser light, the recording film is susceptible to damage due to a heat load which is attributed to laser heating. As a result, there is a probability that the quality of a playback signal will deteriorate; for example, a playback signal will include a large amount of noise. Also, even though a heat load imposed during the recording does not immediately deteriorate the quality of a playback signal, there is a concern that, after long-term storage of the optical information storage medium, the effects of the heat load might become more serious so that a playback signal can be deteriorated.

As described above, in recent years, further increasing the capacity of the optical information storage medium has been demanded. Meanwhile, an optical information storage medium in which information can be recorded at higher speeds has been demanded. To these ends, it is necessary to increase the recording density, to raise the upper limit of the linear velocity for recording, and to increase the number of information layers. Accordingly, the heat load imposed on the recording film of the optical information storage medium has a tendency to further increase. Therefore, reducing the heat load to improve the storage reliability is more important.

Objects of the present invention is to solve the above problems and to provide an optical information storage medium in which the quality of a playback signal in the case of high density/high linear velocity recording is high and which has high storage reliability.

### SOLUTION TO PROBLEM

An optical information storage medium of the present invention includes: a substrate; a cover layer; and a first information layer interposed between the substrate and the cover layer, recording of information in the first information layer and reading of information recorded in the first information layer being realized by irradiation with a light beam incoming from the cover layer side, wherein the first information layer includes a recording film and a protection film interposed between the recording film and the cover layer, and a distance between the cover layer and the recording film is not less than 0.5 nm and not more than 12 nm.

When the distance between the cover layer and the recording film is not less than 0.5 nm and not more than 12 nm, the recording film can be protected from thermal damages, and separation of the protection film can be prevented. Thus, an optical information storage medium can be realized in which the quality of a playback signal in the case of high density/high linear velocity recording is high and which has high storage reliability.

In a preferred embodiment, the optical information storage medium further includes a second information layer interposed between the substrate and the first information layer.

Thus, as for an optical information storage medium which includes stacked information layers and therefore has a large capacity, an optical information storage medium can be realized in which the quality of a playback signal in the case of high density/high linear velocity recording is high and which has high storage reliability.

In a preferred embodiment, the recording film contains a write-once type recording material.

In a preferred embodiment, the write-once type recording material contains at least one selected from the group consisting of Cr-O, Zn-O, Ga-O, In-O, Sn-O, Sb-O, Bi-O and Te-O.

In a preferred embodiment, in the optical information storage medium, the first information layer further includes a reflective film interposed between the recording film and the substrate.

In a preferred embodiment, the first information layer further includes an intermediate film interposed between the recording film and the reflective film.

In a preferred embodiment, the protection film contains at least one selected from the group consisting of Zn-O, Te-O and Sn-O, and in the protection film, a ratio of a total of Zn, Te and Sn to all atoms excluding oxygen is not less than 50 at%.

In a preferred embodiment, the protection film includes both at least one selected from the group consisting of Zn-O, Te-O and Sn-O and at least one selected from the group consisting of Cr-O, Sb-O, Bi-O, In-O and Ga-O, and in the protection film, the ratio of a total of Zn, Te and Sn to all atoms excluding oxygen is not less than 33 at% and not more than 96 at%, and a ratio of a total of Cr, Sb, Bi, In and Ga to all atoms excluding oxygen is not less than 4 at% and not more than 67 at%.

In a preferred embodiment, a pitch of a groove of the first information layer is not more than 1 µm.

In a method of recording information in an optical information storage medium according to the present invention, information is recorded in any of the above optical information storage media by means of a light beam at a wavelength of not more than 450 nm.

In a method of reading information from an optical information storage medium according to the present invention, information recorded in any of the above optical information storage media is read by means of a light beam at a wavelength of not more than 450 nm.

A recording/reading apparatus of the present invention performs at least one of recording information in any of the above optical information storage media by means of a light beam at a wavelength of not more than 450 nm and reading information recorded in the optical information storage medium by means of a light beam at a wavelength of not more than 450 nm.

### ADVANTAGEOUS EFFECTS OF INVENTION

According to the present invention, the distance between the cover layer and the recording film is not less than 0.5 nm and not more than 12 nm, so that the recording film can be protected from thermal damages, and separation of the protection film can be prevented. Thus, an optical information storage medium can be realized in which the quality of a playback signal in the case of high density/high linear velocity recording is high and which has high storage reliability.

### BRIEF DESCRIPTION OF DRAWINGS

FIG. **1** is a schematic partial cross-sectional view showing an embodiment of an optical information storage medium according to the present invention.
FIG. **2** is a schematic partial cross-sectional view showing another embodiment of an optical information storage medium according to the present invention.
FIG. **3** is a schematic partial cross-sectional view showing still another embodiment of an optical information storage medium according to the present invention.
FIG. **4** is a diagram generally showing the major part of an embodiment of a recording/reading apparatus according to the present invention.

### DESCRIPTION OF EMBODIMENTS

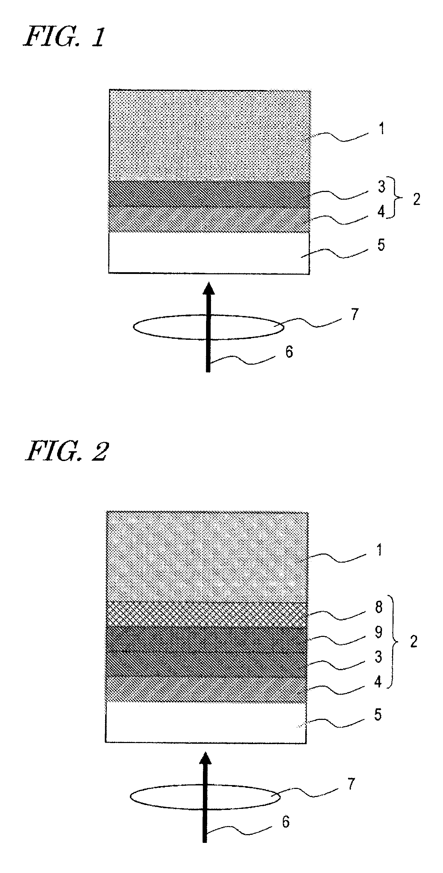

Hereinafter, an embodiment of an optical information storage medium according to the present invention is described. FIG. **1** is a schematic partial cross-sectional view showing an embodiment of an optical information storage medium according to the present invention. The optical :information storage medium shown in FIG. **1** includes a substrate **1,** a cover layer **5,** and a first information layer **2** interposed between the substrate **1** and the cover layer **5.** The first information layer **2** includes at least a recording film **3** and a protection film **4.** The protection film **4** is interposed between the recording film **3** and the cover layer 5.

As shown in FIG. **1****,** recording of information in the first information layer **2** or reading of information recorded in the first information layer **2** is realized by irradiating the first information layer **2,** at the cover layer **5** side, with light beam **6,** such as laser light, which is focused by an objective lens **7.**

As shown in FIG. **2****,** the first information layer **2** may further include a reflective film **8** which is interposed between the recording film **3** and the substrate **1.** Also, the first information layer **2** may further include an intermediate film **9** which is interposed between the recording film 3 and the reflective film **8.**

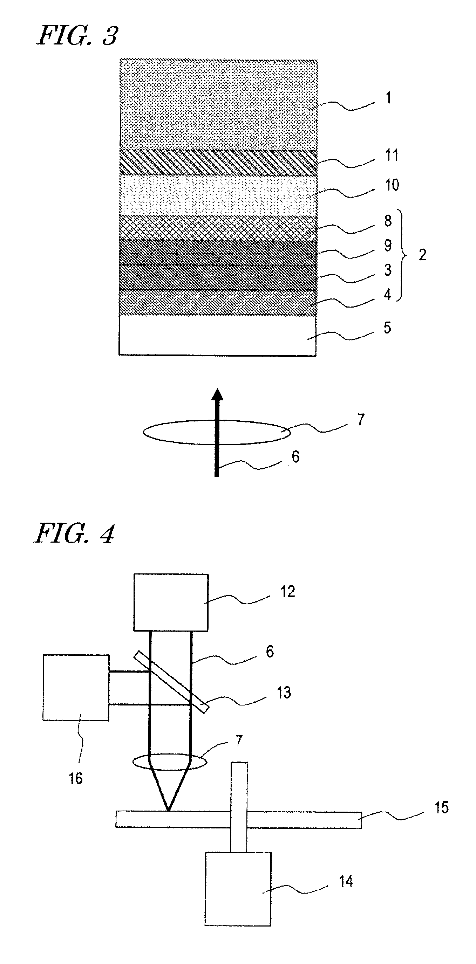

The optical information storage medium may include two or more information layers. Specifically, as shown in FIG. **3****,** the optical information storage medium may further include a second information layer **11** which is interposed between the substrate **1** and the first information layer **2.** In this case, a separation layer **10** is preferably provided between the first information layer **2** and the second information layer **11.** Alternatively, the optical information storage medium may include three or more information layers. When the optical information storage medium includes a plurality of information layers, the plurality of information layers may be sequentially named, such as "L0 layer", "L1 layer", ..., in increasing order of distance from the substrate **1.**

The substrate **1** supports the first information layer **2** and the second information layer **11.** Examples of the material for the substrate **1** include a polycarbonate resin, a polymethylmethacrylate resin, a polyolefin resin, a norbornen resin, a UV-curable resin, and a suitable combination of these resins. The thickness of the substrate **1** is not limited to a specific thickness but may be about 0.01 mm to 3.0 mm. A surface of the substrate **1** which is in contact with the first information layer **2** or the second information layer **11** has a spiral groove. The pitch of the groove is preferably not more than 1 µm in order to increase the recording density. This groove corresponds to a groove formed in the first information layer **2** or the second information layer **11.**

The cover layer **5** prevents generation of scars or scratches in the information layer **2** as well as exposure of the information layer **2** to the ambient air and, hence, oxidation of the information layer **2.** In the optical information medium, the distance from a surface of the cover layer **5** on which a light beam is to be incident to the first information layer **2** is adapted. Examples of the material for the cover layer **5** include a polycarbonate resin, a polymethylmethacrylate resin, a polyolefin resin, a norbornen resin, a UV-curable resin, glass, and a suitable combination of these resins. The thickness of the cover layer **5** is not limited to a specific thickness but is preferably about 0.01 mm to 1.5 mm. When the numerical aperture NA of the objective lens **7** is for example about 0.8 to 0.9, the thickness of the cover layer **5** is preferably about 0.03 mm to 0.3 mm. When the cover layer **5** has a small thickness, for example, when the thickness of the cover layer **5** is not more than 0.3 mm, the cover layer **5** may be formed by attaching a sheet that is made of the aforementioned material onto the information layer **2,** or by applying a UV-curable resin by spin coating over the information layer **2** and curing the resin by UV irradiation.

When the optical information storage medium includes two or more information layers, a separation layer **10** is provided between the two information layers. The separation layer **10** adjusts the distance between the two information layers. For the track of the first information layer **3,** a surface of the separation layer **10** which is closer to the first information layer **2** may have a spiral groove. The material which can be used for the separation layer **10** may be, for example, a UV-curable resin. The thickness of the separation layer **10** is preferably not less than the focal depth that depends on at least the numerical aperture NA of the objective lens **7** and the wavelength λ of the laser light **6** such that, when information is read from any one of the first information layer **2** and the second information layer **11,** the crosstalk from the other information layer is decreased. It is also preferred that the positions of the respective information layers are adjusted by the separation layer **10** such that the objective lens **7** is capable of focusing the light beam **6** on every one of the information layers. For example, when λ=405 nm and NA=0.85, the thickness of the separation layer **10** is preferably not less than 5 µm and not more than 50 µm. Note that, however, if an optical system or technology which is capable of reducing the crosstalk between the information layers will be available, there is a probability that the thickness of the separation layer **10** will be less than 5 µm.

Next, the first information layer **2** is described in detail. As described above, the first information layer **2** includes at least the recording film **3** and the protection film **4.** The recording film **3** contains a write-once type recording material whose phase is changeable by light beam irradiation from an amorphous phase to a crystalline phase. Specifically, the write-once type recording material contains, as the base material, at least one selected from the group consisting of Cr-O, Zn-O, Ga-O, In-O, Sn-O, Sb-O, Bi-O and Te-O. Here, for example, Cr-O and Zn-O mean a chromium oxide (CrOₓ) and a zinc oxide (ZnOₓ), respectively. With these materials contained, in high density/high linear velocity recording, a record mark having a predetermined shape can be formed in the recording film 3. Also, when the formed record mark is irradiated with a light beam, a playback signal of high quality can be obtained. In the recording film **3,** the write-once type recording material may contain, in addition to these base materials, at least one selected from the group consisting of Te, Sb, Bi, Ge, Sn, Ga, In, Pd, Au, Pt, Ni, Ag and Cu as an additive, for the purpose of increasing the temperature and hence the speed of crystallization to achieve an optical change. When Te-O is used as the base material of the write-once type recording material, the write-once type recording material may contain, as the additive, at least one element selected from the group consisting of Te, Al, Si, Ti, V, Cr, Mn, Fe, Co, Ni, Cu, Zn, Ga, Ge, Zr, Nb, Mo, Ru, Rh, Pd, Ag, In, Sn, Sb, Hf, Ta, W, Re, Os, Ir, Pt, Au and Bi.

The major ingredients of the recording film **3,** which include the aforementioned base materials and additives, constitute not less than 80 at%, more preferably not less than 90 at%. When necessary, the recording film **3** may contain, in addition to the above major ingredients, at least one selected from the group consisting of other oxides, nitrides, fluorides, carbides, sulfides, borides, and non-metal elements, such as O, N, F, C, S and B, in the ratio of not more than 10 at%, more preferably not more than 5at%, relative to the entire recording film **2,** for the purpose of adjusting the crystallization speed, thermal conductivity, or optical constants, or for the purpose of improving the thermal resistance or the humidity resistance.

The thickness of the recording film **3** is preferably not less than 2 nm and not more than 70 nm, more preferably not less than 4 nm and not more than 40 nm. When the thickness of the recording film **3** is less than 2 nm, none of sufficient reflectance and a sufficient change in reflectance can be obtained, so that the C/N ratio (carrier-to-noise ratio) of the playback signal becomes small. When the thickness of the recording film **3** is more than 70 nm, the thermal diffusion in the thin film plane of the recording film **3** is relatively large, so that the outline of the record mark becomes blurred, and the C/N ratio of the playback signal is small in the case of high density recording.

The recording film **3** has a spiral groove which corresponds to the groove formed in the substrate **1.** Part of the recording film **3** extending between the grooves is a spiral elevated portion. Therefore, the pitch of the groove formed in the recording film **3** is also preferably not more than 1 µm. The groove and the elevated portion are referred to as "groove" and "land". The groove or/and the land is selected as a track for recording of information according to the recording format.

The protection film **4** mainly protects the recording film **3** from humidity, and protects the recording film **3** from thermal damages when the temperature of the recording film is increased by a light beam, so that deformation of the cover layer **5** due to heat from the recording film **3** can be prevented. To this end, the protection film **4** is preferably made of a material which has high thermal resistance. Specifically, the protection film **4** is preferably made of an inorganic material, more preferably an inorganic dielectric material. More specifically, the protection film **4** contains at least one of the group consisting of Zn-O, Te-O and Sn-O. In the protection film **4,** the ratio of the total of Zn, Te and Sn to the all atoms excluding oxygen is preferably not less than 50at%. Alternatively, the protection film **4** contains both at least one selected from the group consisting of Zn-O, Te-O and Sn-O and at least one selected from the group consisting of Cr-O, Sb-O, Bi-O, In-O and Ga-O. In this case, it is preferred that, in the protection film **4,** the ratio of the total of Zn, Te and Sn to the all atoms excluding oxygen is preferably not less than 33 at% and not more than 96 at%, and the ratio of the total of Cr, Sb, Bi, In and Ga to the all atoms excluding oxygen is preferably not less than 4 at% and not more than 67 at%. This arrangement ensures high storage reliability in the case of high density recording. Also, any material other than the aforementioned materials may be added to such an amount that does not mar the original function, e.g., within the range of not more than 10 at%. Alternatively, the protection film **4** may be formed by oxidizing a surface of the recording film **3.**

Specifically, the thickness of the protection film **4** is preferably not less than 0.5 nm and not more than 12 nm, more preferably not less than 1 nm and not more than 5 nm. As previously described, what is important for the protection film **4** is to fulfill the main functions of protecting the recording film **3** from humidity, protecting the recording film **3** from thermal damages, and preventing deformation of the cover layer **5.** Therefore, it was traditionally believed that the protection film of the optical information storage medium should have a greater thickness. For example, among conventional DVDs, the thickness of the protection film is commonly not less than 100 nm. Among conventional BDs, the thickness of the protection film is 20 nm. The present inventor conducted detailed research and found that the above-described functions can be sufficiently fulfilled even when the thickness of the protection film is not less than 0.5 nm and not more than 12 nm, which is much smaller than the conventional thicknesses. On the other hand, when the thickness of the protection film **4** is several tens of nanometers or greater as in the conventional discs, or when the optical information storage medium is stored away for a long time or stored in a high temperature, high humidity environment, the membrane stress is caused in the protection film **4** so that separation of the recording film **3** and the protection film **4** occurs, resulting in blurred mark boundary in a separated portion or generation of undulations of the protection film. As a result, the playback signal may have degraded quality.

In the optical information storage media shown in FIG. **1** to FIG. **3****,** only the protection film **4** intervenes between the cover layer 5 and the recording film **3.** However, if another film intervenes between the recording film **3** and the cover layer **5,** the function of preventing deformation of the cover layer **5,** which is one of the functions of the protection film **4,** is affected by the intervening film. Thus, considering a case where not only the protection film **4** but also another film intervenes between the recording film **3** and the cover layer **5** in the first information layer **2,** the distance between the cover layer **5** and the recording film **3** is preferably not less than 0.5 nm and not more than 12 nm, more preferably not less than 1 nm and not more than 5 nm.

Since the protection film **4** is formed of the aforementioned materials and has the aforementioned thickness, the protection film **4** meets the following requirements: (1) the protection film **4** protects the recording film **3** from thermal damages; (2) the protection film **4** exhibits good adhesion with neighboring materials, such as the recording film **3,** so that separation, corrosion, and diffusion would not occur even in a high temperature, high humidity environment; (3) the protection film **4** has high transparency and appropriate refractive index to enhance the optical change of the recording film **3;** and (4) the protection film **4** itself has thermal stability so that the grain size and the compositional distribution would not vary even in a high temperature, high humidity environment.

As a result, the optical information storage medium of the present embodiment has high storage reliability even in the case of high density/high linear velocity recording. In a conventional optical information storage medium, when information was recorded at a linear velocity of, for example, about 4 m/s, recorded information underwent no deterioration during storage in a high temperature, high humidity environment (e.g., temperature: 85°C, relative humidity: 85%). However, when information was recorded at a linear velocity which was faster than that by a factor of 2 or more, deterioration of the recorded information was sometimes detected. This is probably because, when the linear velocity is increased, it is necessary to use a light beam of higher power in recording of information. The beam of higher power increases the heat load which is imposed on the recording film, and hence causes deterioration of the information.

On the other hand, in the optical information storage medium of the present embodiment, the distance between the cover layer **5** and the recording film **3** is maintained within a predetermined range as described above, whereby deterioration of information is prevented even in the case of high linear velocity recording which imposes more stringent requirements. As compared to the optical information storage medium shown in FIG. **1** which includes one information layer, the optical information storage medium shown in FIG. **3** which includes a plurality of information layers requires that a light beam which is supplied for recording of information in or reading of information from the second information layer pass through the first information layer. Therefore, the thicknesses of the recording film **3** and the reflective film **8** of the first information layer **2** need to be small. In this case, when the medium is stored in a high temperature and/or high humidity environment, deterioration of information readily increases. The optical information storage medium of the present embodiment can exhibit high storage reliability especially when it includes a plurality of information layers.

In the first information layer **2,** the reflective film **8** has the function of reflecting the light beam **6.** Examples of the material for the reflective film **8** include metals, such as Ag, Au, Al, Cu, and alloys which contain these metals. Preferably, the reflective film **8** is made of an Ag alloy which has high reflectance. In this case, more excellent playback signal quality is obtained in the case of high density/high linear velocity recording. Although the additive element for Ag is not specifically limited, an element which has, for example, the effects of preventing coagulation and decreasing the grain size even when the content of the element is small, such as Pd, Pt, Ni, Ru, Au, Cu, Zn, Al, Ga, In, Si, Ge, Sn, Sb, Bi, Ca, Mg, Y, Nd, Sm, Ti, Cr, O, N, F, C, S, B, may be added to the material for the reflective film **8.** Especially when using one selected from the group consisting of Pd, Cu, Bi, Nd, Y and Ga, a high coagulation preventing effect and a high grain size decreasing effect can be obtained. To achieve these effects without deteriorating the high thermal conductivity and high reflectance of Ag, the content of the additive element is preferably not less than 0.01 at% and not more than 10 at%, more preferably not less than 0.05 at% and not more than 5 at%, relative to the entire reflective film **5.**

The intermediate film **9** has the function of reducing and adapting the speed of the heat release from the recording film 3 to the reflective film **8** and the function of adapting the optical characteristics of the entire information layer by means of an optical interference effect. Examples of the material for the intermediate film **9** include oxides of Y, Ce, Ti, Zr, Nb, Ta, Co, Zn, Al, Si, Ge, Sn, Pb, Sb, Bi and Te, nitrides of Ti, Zr, Nb, Ta, Cr, Mo, W, B, Al, Ga, In, Si, Ge, Sn and Pb, carbides of Ti, Zr, Nb, Ta, Cr, Mo, W and Si, sulfides, selenides, and tellurides of Zn and Cd, fluorides of rare earth metals, such as Mg, Ca and La, simple metals of C, Si and Ge, and mixtures of these materials. Thus, more excellent playback signal quality is obtained in the case of high density/high linear velocity recording. Note that, when the reflective film **8** contains Ag or an Ag alloy, there is a probability that using a sulfide as the material for the intermediate film **9** will cause corrosion of the reflective film **8.** Therefore, when the reflective film **8** contains Ag or an Ag alloy, the intermediate film **9** is preferably made of a material which does not contain a sulfide. The intermediate film **9** may be made of the same material as that of the protection film **4.** The thickness of the intermediate film **9** is preferably not less than 2 nm and not more than 40 nm, more preferably not less than 5 nm and not more than 20 nm.

Next, a method of fabricating an optical information storage medium according to the present embodiment is described. The optical information storage medium of the present embodiment may be fabricated by forming the first information layer **2** on the cover layer **5,** or sequentially forming the first information layer **2,** the separation layer **10,** and the second information layer **11** on the cover layer **5,** and thereafter forming or attaching the substrate **1** onto the cover layer **5** on which the information layer(s) and the separation layer **10** have been formed. Alternatively, the optical information storage medium of the present embodiment may be fabricated by forming the first information layer **2** on the substrate **1,** or sequentially forming the second information layer **11,** the separation layer **10,** and the first information layer **2** on the substrate **1,** and thereafter forming or attaching the cover layer **5.** Particularly, the latter is suitable to a case where the numerical aperture NA of the objective lens **7** is large, e.g., 0.8 or more, and the thickness of the objective lens **7** is not more than the thickness of the substrate **1,** i.e., not more than 0.3 mm. In that case, a groove which serves as a guide groove for the laser light **6** and a pattern of recesses and elevations for an address signal, or the like, need to be formed in the surfaces of the substrate **1** and the separation layer **10,** i.e., need to be transferred from a mold which has a predetermined pattern of recesses and elevations, such as a stamper. In that process, if the layer has a small thickness as the separation layer **10** particularly does and therefore a commonly-employed injection method is difficult to apply, a 2P method (photo-polymerization method) can be employed.

The first information layer **2** and the second information layer **11,** which are thin films, can be formed by, for example, a vapor phase thin film deposition method, such as vacuum deposition, sputtering, ion plating, CVD (Chemical Vapor Deposition), and MBE (Molecular Beam Epitaxy). When sputtering, vacuum deposition, or MBE is used, a thin film which has a predetermined composition may be formed using a target or deposition source which has the same composition as that of the thin film that is to be formed.

The present inventor confirmed that, in the respective examples described below, the composition of the target material used for each thin film was approximately equal to that of an actually-formed thin film. Note that the composition of the target material and the composition of the actually-formed thin film may sometimes be different because of a film formation apparatus, film formation conditions, a target manufacturing method, etc. In such a case, it is preferred that a correction coefficient for correction of a composition mismatch is empirically obtained beforehand, and the composition of the target material is determined such that a thin film which has a predetermined composition can be obtained. The thicknesses of the respective thin films can be controlled by adjusting the film formation time and the film formation speed.

The materials, i.e., the material elements, of each thin film and the composition thereof can be analyzed by, for example, Auger electron spectroscopy, X-ray photoelectron spectroscopy, or secondary ion-mass spectrography (see, for example, Thin Film Manufacturing handbook compiled by the Japan Society of Applied Physics, Thin Film and Surface Physics Division, published by KYORITSU SHUPPAN CO., LTD in 1991) .

Next, a method of recording information in an optical information storage medium, a method of reading information from an optical information storage medium, and a recording/reading apparatus according to the present invention are described.

FIG. **4** generally shows an example of the components indispensable for a recording/reading apparatus which is configured to perform at least one of recording information in an optical information storage medium of the present invention and reading information recorded in the optical information storage medium.

The recording/reading apparatus shown in FIG. **4** includes a light source **12,** an objective lens **7,** a motor **14,** a half mirror **6,** and a photodetector **16.** To realize a high recording density, the light beam **6** emitted from the light source **12** preferably has a short wavelength, e.g., not more than 450 nm. The light beam **6** emitted from a laser diode that serves as the light source **12** passes through the half mirror **6** and enters the objective lens **7.** The objective lens **7** focuses the light beam **6** such that a beam spot which has a predetermined size is formed on the recording film **3** of the first information layer **2** (FIG. 1) of the optical information storage medium **15** that is placed on the turntable of the motor **14.** The optical information storage medium **15** employed may be the above-described optical information storage medium of the present embodiment.

In recording of information, the light source is driven based on a signal which is modulated according to the information that is to be recorded, whereby the recording film **3** of the optical information storage medium **15** is irradiated with the modulated light beam **6.** The motor **14** spins the optical information storage medium **15** such that the light beam **6** scans a track of the optical information storage medium **15** to form record marks.

In reading of information recorded in the optical information storage medium **15,** the light beam **6,** which has a smaller power than in the recording, scans the track of the optical information storage medium **15,** and the reflected light is then reflected by the half mirror **13** toward the detector **16.** The detector **16** converts the reflected light to an electric signal. The electric signal is processed, whereby the information recorded in the optical information storage medium **15** is obtained as a playback signal.

The recording/reading apparatus of the present embodiment is particularly suitable to a case where information is recorded in the optical information storage medium **15** at a high linear velocity for recording (high recording speed) and a high recording density.

### EXAMPLES

Hereinafter, the present invention is described in more detail with specific examples where the present inventor fabricated optical information storage media including protection films which were made of different materials and which have different thicknesses, and evaluated the fabricated optical information storage media. The present invention is not limited to the examples shown below.

### (Example 1)

Optical information storage media which included one information layer, Discs No. 1 to No. 22, were fabricated. The substrate used herein was made of a polycarbonate resin and had a diameter of about 12 cm, a thickness of about 1.1 mm, and a spiral groove with a groove pitch of 0.32 µm and a groove depth of about 20 nm. On a surface of the substrate which had the groove, a 60 nm thick reflective film made of Ag₉₉Bi₁, a 20 nm thick intermediate film made of (ZnO)₉₀(Cr₂O₃)₁₀, a 25 nm thick recording film made of Te₃₆O₅₄Pd₁₀, and a protection film whose material and thickness were different among the discs, were formed in this order by sputtering as the first information layer. On a surface of the resultant first information layer, a 100 µm thick cover layer was formed of a UV-curable resin.

The materials and thicknesses employed for the protection films of Discs No. 1 to No. 22 are as shown in TABLE 1.

**[TABLE 1]**

| Disc No. | Protection Film | | Decrease in C/N Ratio after Accelerated Aging | |
|---|---|---|---|---|
| | Material | Thickness | Linear Velocity for Recording 4.9m/s | Linear Velocity for Recording 9.8m/s |
| 1 | (ZnO)₉₀(Cr₂O₃)₁₀ | 0.2nm | × | × |
| 2 | (ZnO)₉₀(Cr₂O₃)₁₀ | 0.5nm | ○ | ○ |
| 3 | (ZnO)₉₀(Cr₂O₃)₁₀ | 1nm | ⓞ | ⓞ |
| 4 | (ZnO)₉₀(Cr₂O₃)₁₀ | 3nm | ⓞ | ⓞ |
| 5 | (ZnO)₉₀(Cr₂O₃)₁₀ | 5nm | ⓞ | ⓞ |
| 6 | (ZnO)₉₀(Cr₂O₃)₁₀ | 10nm | ⓞ | ⓞ |
| 7 | (ZnO)₉₀(Cr₂O₃)₁₀ | 12nm | ⓞ | ○ |
| 8 | (ZnO)₉₀(Cr₂O₃)₁₀ | 15nm | ○ | Δ |
| 9 | (ZnO)₉₀(Cr₂O₃)₁₀ | 20nm | ○ | Δ |
| 10 | (ZnO)₇₀(Cr₂O₃)₃₀ | 3nm | ⓞ | ⓞ |
| 11 | (ZnO)₇₀(Bi₂O₃)₃₀ | 3nm | ⓞ | ○ |
| 12 | (SnO)₇₀(ln₂O₃)₃₀ | 3nm | ⓞ | ⓞ |
| 13 | (SnO)₇₀(Bi₂O₃)₃₀ | 0.2nm | × | × |
| 14 | (SnO)₇₀(Bi₂O₃)₃₀ | 0.5nm | ○ | ○ |
| 15 | (SnO)₇₀(Bi₂O₃)₃₀ | 1nm | Ⓞ | Ⓞ |
| 16 | (SnO)₇₀(Bi₂O₃)₃₀ | 3nm | Ⓞ | Ⓞ |
| 17 | (SnO)₇₀(Bi_{2O3})₃₀ | 5nm | Ⓞ | Ⓞ |
| 18 | (SnO)₇₀(Bi₂O₃)₃₀ | 10nm | Ⓞ | ○ |
| 19 | (SnO)₇₀(Bi₂O₃)₃₀ | 12nm | Ⓞ | ○ |
| 20 | (SnO)₇₀(Bi₂O₃)₃₀ | 15nm | ○ | Δ |
| 21 | (SnO)₇₀(Bi₂O₃)₃₀ | 20nm | ○ | Δ |
| 22 | (SnO)₅₀(TeO₂)₅₀ | 3nm | Ⓞ | Ⓞ |
| NOTE Ⓞ: Decrease in C/N ratio was less than 0.5 dB ○: Decrease in C/N ratio was not less than 0.5 dB and less than 1.0 dB Δ: Decrease in C/N ratio was not less than 1.0 dB and less than 3.0 dB ×: Decrease in C/N ratio was not less than 3.0 dB | | | | |

The groove of respective ones of the above discs, i.e., part of the spiral groove elevated toward the laser light incoming side, was irradiated with laser light at the wavelength of 405 nm using an optical system with the lens numerical aperture of 0.85, while spinning the disc at the linear velocities of 4.9 m/s and 9.8 m/s, whereby a single-frequency signal at the frequency of 16.5 MHz and a single-frequency signal at the frequency of 33.0 MHz, respectively, were recorded. In recording of the signals, single pulses with power level P1 and pulse widths of 6 ns and 3 ns were used. The power level P2 for a non-record portion and for information reading was always 0.7 mW.

Under these conditions, the signals were recorded once in an unrecorded track, and the C/N ratio of the single-frequency signals was measured by a spectrum analyzer. The measurement was carried out while arbitrarily varying power level P1 to set the test power level. Here, the test power level was 1.25 times the power level at which the amplitude was lower than the maximum by 3 dB. In each of the discs, the C/N ratio at the test power level (pre-aging C/N ratio) was measured. Thereafter, to examine the storage reliability, the disc was stored in an environment where the temperature was 85°C and the relative humidity was 85% for 200 hours, and then, the C/N ratio (post-aging C/N ratio) was measured again. The results of the measurement are shown in TABLE 1.

As seen from TABLE 1, as for Discs Nos. 1 and 13 that had the 0.2 nm thick protection film, the decrease in the C/N ratio after the accelerated aging was large for both linear velocities, which means insufficient storage reliability. As for Discs Nos. 8, 9, 20 and 21 that had the 15 nm or 20 nm thick protection film, the decrease in the C/N ratio after the accelerated aging was large for the higher linear velocity (9.8 m/s), which means insufficient storage reliability. On the other hand, as for Discs Nos. 2, 3, 4, 5, 6, 7, 10, 11, 12, 14, 15, 16, 17, 18, 19 and 22, the decrease in the C/N ratio after the accelerated aging was small for both linear velocities, which means excellent storage reliability. It was thus confirmed that, if the distance between the cover layer and the recording film is from 0.5 nm to 12 nm, excellent storage reliability can be ensured.

### (Example 2)

Optical information storage media which included two information layers, Discs No. 23 to No. 44, were fabricated. The substrate used herein was made of a polycarbonate resin and had a diameter of about 12 cm, a thickness of about 1.1 mm, and a spiral groove with a groove pitch of 0.32 µm and a groove depth of about 20 nm. On a surface of the substrate which had the groove, a 60 nm thick reflective film made of Ag₉₉Bi₁, a 20 nm thick intermediate film made of (ZnO)₉₀ (Cr₂O₃)₁₀, a 25 nm thick recording film made of Te₃₆O₅₄Pd₁₀, and a 3 nm thick protection film made of (ZnO)₉₀(Cr₂O₃)₁₀ were formed in this order by sputtering as the second information layer. On a surface of the resultant second information layer, a groove pattern which was similar to that formed in the protection substrate was transferred using a UV-curable resin according to a 2P method, whereby a separation layer having a thickness of about 25 µm was formed. On a surface of the resultant separation layer, a 15 nm thick reflective film made of Ag₉₉Bi₁, a 20 nm thick intermediate film made of (ZnO)₉₀(Cr2O₃)₁₀, a 15 nm thick recording film made of Te₃₆O₅₄Pd₁₀, and a protection film whose material and thickness were different among the discs, were formed in this order by sputtering as the first information layer. On a surface of the resultant first information layer, a 75 µm thick cover layer was formed using a UV-curable resin.

The materials and thicknesses employed for the protection films of Discs No. 23 to No. 44 are as shown in TABLE 2.

**[TABLE 2]**

| Disc No. | Protection Film | | Decrease in C/N Ratio after Accelerated Aging | |
|---|---|---|---|---|
| | Material | Thickness | Linear Velocity for Recording 4.9m/s | Linear Velocity for Recording 9.8m/s |
| 23 | (ZnO)₉₀(Cr₂O₃)₁₀ | 0.2nm | × | × |
| 24 | (ZnO)₉₀(Cr₂O₃)₁₀ | 0.5nm | ○ | ○ |
| 25 | (ZnO)₉₀(Cr₂O₃)₁₀ | 1nm | ○ | ○ |
| 26 | (ZnO)₉₀(Cr₂O₃)₁₀ | 3nm | Ⓞ | Ⓞ |
| 27 | (ZnO)₉₀(Cr₂O₃)₁₀ | 5nm | Ⓞ | ○ |
| 28 | (znO)₉₀(cr₂O₃)₁₀ | 10nm | ○ | ○ |
| 29 | (ZnO)₉₀(Cr₂O₃)₁₀ | 12nm | ○ | ○ |
| 30 | (zno)₉₀(Cr₂O₃)₁₀ | 15nm | ○ | Δ |
| 31 | (ZnO)₉₀(Cr₂O₃)₁₀ | 20nm | ○ | Δ |
| 32 | (ZnO)₇₀(Cr₂O₃)₃₀ | 3nm | ○ | ○ |
| 33 | (ZnO)₇₀(Bi_{2O3})₃₀ | 3nm | ○ | ○ |
| 34 | (SnO)₇₀(ln₂O₃)₃₀ | 3nm | Ⓞ | ○ |
| 35 | (SnO)₇p(Bi₂O₃)₃₀ | 0.2nm | × | × |
| 36 | (SnO)₇₀(Bi₂O₃)₃₀ | 0.5nm | ○ | ○ |
| 37 | (SnO)₇₀(Bi₂O₃)₉₀ | 1nm | ○ | ○ |
| 38 | (SnO)₇₀(Bi_{2O3})₃₀ | 3nm | Ⓞ | ○ |
| 39 | (SnO)₇₀(Bi₂O₃)₃₀ | 5nm | Ⓞ | ○ |
| 40 | (SnO)₇₀(Bi₂O₃)₃₀ | 10nm | ○ | ○ |
| 41 | (SnO)₇₀(Bi₂O₃)₃₀ | 12nm | ○ | ○ |
| 42 | (SnO)₇₀(Bi₂O₃)₃₀ | 15nm | ○ | Δ |
| 43 | (SnO)₇₀(Bi₂O₃)₃₀ | 20nm | ○ | Δ |
| 44 | (SnO)₅₀(TeO₂)₅₀ | 3nm | ○ | ○ |
| NOTE Ⓞ : Decrease in C/N ratio was less than 0.5 dB ○ : Decrease in C/N ratio was not less than 0.5 dB and less than 1.0 dB Δ : Decrease in C/N ratio was not less than 1.0 dB and less than 3.0 dB × : Decrease in C/N ratio was not less than 3.0 dB | | | | |

As in Example 1, the grooves of the first information layer and the second information layer of respective ones of the above discs, i.e., part of the spiral groove elevated toward the laser light incoming side, were irradiated with laser light at the wavelength of 405 nm using an optical system with the lens numerical aperture of 0.85, while spinning the disc at the linear velocities of 4.9 m/s and 9.8 m/s, whereby a single-frequency signal at the frequency of 16.5 MHz and a single-frequency signal at the frequency of 33.0 MHz, respectively, were recorded. In recording of the signals, single pulses with power level P1 and pulse widths of 6 ns and 3 ns were used. The power level P2 for a non-record portion and for information reading was always 0.7 mW.

Under these conditions, the signals were recorded once in unrecorded tracks of the first information layer and the second information layer, and the C/N ratio of the single-frequency signals was measured by a spectrum analyzer. The measurement was carried out while arbitrarily varying power level P1 to set the test power level. Here, the test power level was 1.25 times the power level at which the amplitude was lower than the maximum by 3 dB. In each of the discs, the C/N ratio at the test power level (pre-aging C/N ratio) was measured. Thereafter, to examine the storage reliability, the disc was stored in an environment where the temperature was 85°C and the relative humidity was 85% for 200 hours, and then, the C/N ratio (post-aging C/N ratio) was measured again. The results of the C/N ratio measurement in the first information layer are shown in TABLE 2.

As seen from TABLE 2, as for Discs Nos. 23 and 35 that had the 0.2 nm thick protection film, the decrease in the C/N ratio after the accelerated aging was large for both linear velocities, which means insufficient storage reliability. As for Discs Nos. 30, 31, 42 and 43 that had the 15 nm or 20 nm thick protection film, the decrease in the C/N ratio after the accelerated aging was large for the higher linear velocity (9.8 m/s), which means insufficient storage reliability. On the other hand, as for Discs Nos. 24, 25, 26, 27, 28, 29, 32, 33, 34, 36, 37, 38, 39, 40, 41 and 44, the decrease in the C/N ratio after the accelerated aging was small for both linear velocities, which means excellent storage reliability.

It was thus confirmed that, if the distance between the cover layer and the recording film is from 0.5 nm to 12 nm, excellent storage reliability can be ensured. Note that, in the respective discs of Example 2, the pre-aging C/N ratio was lower than that of the discs of Example 1 by about 2 dB. As such, the margin of the C/N ratio is small. If the C/N ratio decreases in the accelerated test, the quality of the playback signal is insufficient, and therefore, it is expected that a greater number of optical information storage media will be judged unsuitable for practical use as a commercial product. In such a case, according to the present invention, the storage reliability is high, so that the decrease in the C/N ratio due to the accelerated aging can be prevented. Thus, the present invention is suitably applicable to an optical information storage medium which includes two or more information layers.

Thus, it was understood from Example 1 and Example 2 that the present invention is suitably applicable to both an optical information storage medium which includes one information layer and an optical information storage medium which includes two or more information layers.

### INDUSTRIAL APPLICABILITY

An optical information storage medium of the present invention is suitably applicable to optical information storage media for storing information that is convertible to electronic information, such as video, music, information, etc., which are designed for high recording density and high recording speed.

### REFERENCE SIGNS LIST

- 1: substrate
- 2: first information layer
- 3: recording film
- 4: protection film
- 5: cover layer
- 6: laser light
- 7: objective lens
- 8: reflective film
- 9: intermediate film
- 10: separation film
- 11: second information layer
- 12: laser diode
- 13: half mirror
- 14: motor
- 15: optical information storage medium
- 16: photodetector

## Claims

1. An optical information storage medium, comprising:
a substrate;
a cover layer; and
a first information layer interposed between the substrate and the cover layer, recording of information in the first information layer and reading of information recorded in the first information layer being realized by irradiation with a light beam incoming from the cover layer side,
wherein the first information layer includes a recording film and a protection film interposed between the recording film and the cover layer, and
a distance between the cover layer and the recording film is not less than 0.5 nm and not more than 12 nm.

2. The optical information storage medium of claim 1, further comprising a second information layer interposed between the substrate and the first information layer.

3. The optical information storage medium of claim 2, wherein the recording film contains a write-once type recording material.

4. The optical information storage medium of claim 3, wherein the write-once type recording material contains at least one selected from the group consisting of Cr-O, Zn-O, Ga-O, In-O, Sn-O, Sb-O, Bi-O and Te-O.

5. The optical information storage medium of claim 4, wherein the first information layer further includes a reflective film interposed between the recording film and the substrate.

6. The optical information storage medium of claim 5, wherein the first information layer further includes an intermediate film interposed between the recording film and the reflective film.

7. The optical information storage medium of claim 6, wherein
the protection film contains at least one selected from the group consisting of Zn-O, Te-O and Sn-O, and
in the protection film, a ratio of a total of Zn, Te and Sn to all atoms excluding oxygen is not less than 50 at%.

8. The optical information storage medium of claim 7, wherein
the protection film includes both at least one selected from the group consisting of Zn-O, Te-O and Sn-O and at least one selected from the group consisting of Cr-O, Sb-O, Bi-O, In-O and Ga-O, and
in the protection film, the ratio of a total of Zn, Te and Sn to all atoms excluding oxygen is not less than 33 at% and not more than 96 at%, and a ratio of a total of Cr, Sb, Bi, In and Ga to all atoms excluding oxygen is not less than 4 at% and not more than 67 at%.

9. The optical information storage medium of claim 8, wherein a pitch of a groove of the first information layer is not more than 1 µm.

10. A method of recording information in the optical information storage medium as set forth in any of claims 1 to 9 by means of a light beam at a wavelength of not more than 450 nm.

11. A method of reading information recorded in the optical information storage medium as set forth in any of claims 1 to 9 by means of a light beam at a wavelength of not more than 450 nm.

12. A recording/reading apparatus which performs at least one of recording information in the optical information storage medium as set forth in any of claims 1 to 9 by means of a light beam at a wavelength of not more than 450 nm and reading information recorded in the optical information storage medium by means of a light beam at a wavelength of not more than 450 nm.
